# EUROPEAN PATENT APPLICATION

(11) **EP 1 555 277 A1**
(43) Date of publication of application: **20.07.2005**
(21) Application number: 03754160.4
(22) Date of filing: 16.10.2003
(51) Int. Cl.: C08G 59/02, C08F 8/08

(54) **ORGANIC POLYMER HAVING EPOXY-GROUP-CONTAINING SILICON GROUP AT END AND PROCESS FOR PRODUCING THE SAME**

(30) Priority: 22.10.2002 JP 2002306620
(71) Applicant: KANEKA CORPORATION, Osaka-shi, Osaka 530-8288 (JP)
(72) Inventor: KOHNO, Yoshiyuki, Akashi-shi, Hyogo 673-0018 (JP); ANDO, Hiroshi, Akashi-shi, Hyogo 676-0849 (JP)
(74) Representative: Brown, Fraser Gregory James
(86) International application number: PCT/JP2003/013273
(87) International publication number: WO 2004/037884

(57) **Abstract**

The present invention provides an organic polymer produced by selectively and quantitatively introducing a plurality of epoxy-containing silicon groups in the ends of any one of various organic polymers. The present invention also provides a process for easily producing the polymer, in which deterioration of polymers during the introduction of epoxy groups does not occur, or no labor for purification or the like due to the generation of by-products is required. For example, the organic polymer having epoxy-containing silicon groups at its ends is produced by addition reaction between an organic polymer having unsaturated groups at its ends and a hydrosilane compound having an epoxy group. Alternatively, the organic polymer having epoxy-containing silicon groups at its end is produced by addition reaction between an organic polymer having unsaturated groups at its ends and a hydrosilane compound having a plurality of hydrosilyl groups and then addition reaction with an epoxy-containing compound having an unsaturated group at an end.

## Description

### Technical Field

The present invention relates to a novel polymer having epoxy-containing silicon groups at its ends, and to a process for producing the same.

### Background Art

Various epoxy-containing polymers have been conventionally developed by introducing epoxy groups in polymers because of the high reactivity and adhesion of epoxy groups. However, a method for introducing an epoxy group by epoxidating an olefin with a peroxide or the like is disadvantageous in that a polymer is deteriorated by oxidation or the like, and it is difficult to make a polymer end polyfunctional or selectively introduce an epoxy group in an end of a polymer. Also, some production processes require removal of by-products. As the above-mentioned method, Patent Document 1 discloses a polymerization method for producing an epoxy-containing polyisobutene. This method and the structure of the epoxy-containing polymer obtained by the method have anxieties about the above-described oxidative deterioration, and the like, and about reactivity influenced by steric hindrance around the epoxy group of the resulting polymer. Therefore, the epoxy-containing polymer produced by the conventional method does not necessarily exhibit satisfactory physical properties for various applications.

On the other hand, it is widely known that various organic polymers have respective peculiar characteristics. In particular, those having a saturated hydrocarbon polymer as a main chain skeleton selected from the group consisting of polyisobutylene, hydrogenated polyisoprene, and hydrogenated polybutadiene, and copolymers thereof have characteristics such as high weather resistance, high heat resistance, low moisture permeability, low gas permeability, and excellent flexibility. On the other hand, oxyalkylene polymers have excellent compatibility with other polymers, excellent flexibility, and excellent low-temperature characteristics.

Also, there have been developed various polymers each produced by introducing a hydrolysable group, an unsaturated group, a hydrosilyl group, or the like in an end of any one of the above-described saturated hydrocarbon polymers and the oxyalkylene polymer. However, these polymers are disadvantageous in that moisture and heating are required for curing, and storage stability is unsatisfactory. In particular, in applications to bonding and sealing of electronic parts, there have recently been demands for converting a conventional thermosetting type to a photosetting type in order to shorten the process time and for utilizing the photosetting type for parts weak against heat, such as an organic EL potting material or the like. Therefore, epoxy-containing polymers are used in new applications such as photo-cation curing and the like, and expected to be used in the field of electronic materials and the like.

Therefore, polymers produced by selectively introducing epoxy groups in the ends of various organic polymers are highly required, and a simple production process is required, in which deterioration of polymers during the introduction of epoxy groups does not occur, or no labor for purification or the like due to the generation of by-products is required.

The inventors performed research on a polymer having epoxy-containing silicon groups at its end and a process for producing the same. As a result, it was found to be difficult to increase the number of epoxy groups at an end of an organic polymer. Therefore, it has been desired to develop a method for easily increasing the number of end epoxy groups.

Patent Document 1: Japanese Unexamined Patent Application Publication No. 3-56505

### Disclosure of Invention

An object of the present invention is to provide a novel organic polymer having epoxy-containing silicon groups at its ends, and a process for producing the same, the organic polymer being produced by selectively introducing a plurality of epoxy-containing silicon groups in the ends of any one of various organic polymers.

As a result of intensive research for solving the above-mentioned problems, the inventors found that a polymer having specified epoxy-containing silicon groups exhibits excellent physical properties, resulting in the achievement of the present invention.

In a first aspect of the present invention, the present invention relates to an organic polymer having an end structure represented by formula (1) or (2): 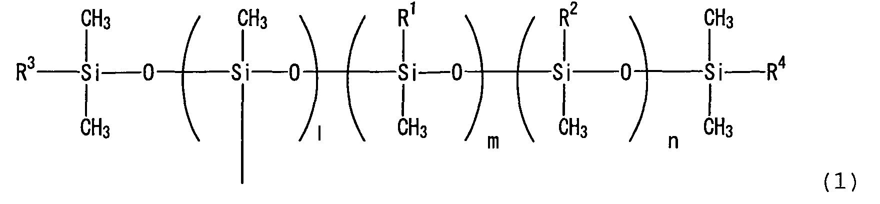 (wherein R¹ is an epoxy-containing monovalent organic group; R² is a hydrocarbon group having 1 to 20 carbon atoms and may contain at least one phenyl group; R³ and R⁴ are each a methyl group or the same as R¹ or R², or one of R³ and R⁴ is a bond to the organic polymer; l is 1 on average and represents a bond to an end of the organic polymer, but l is 0 when one of R³ and R⁴ is a bond to an end of the organic polymer; 1 ≤ m+n ≤ 50, 1 ≤ m, and 0 ≤ n; the position of each unit is not limited; and when a plurality of units is contained, the units may be alternately or randomly arranged.) 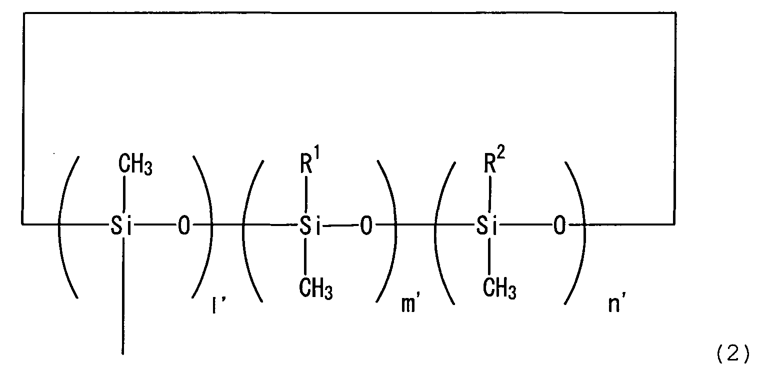 (wherein R¹ and R² are the same as in formula (1), 1' is 1 on average and represents a bond to an end of the organic polymer; 1 ≤ m'+n' ≤ 20, 1 ≤ m', and 0 ≤ n'; the position of each unit is not limited; and when a plurality of units is contained, the units may be alternately or randomly arranged.)

In a second aspect, the present invention relates to an organic polymer having the above-described end structure in which R¹ has a structure represented by formula (3): 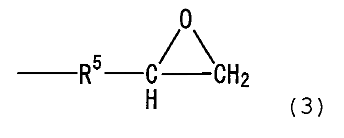 (wherein R⁵ represents a divalent organic group having 1 to 20 carbon atoms and containing at least one constituent atom selected from the group consisting of hydrogen, oxygen, and nitrogen.)

In a third aspect, the present invention relates to an organic polymer having the above-described end structure in which R¹ has a structure represented by formula (4): 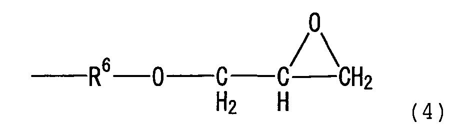 (wherein R⁶ represents a divalent organic group having 1 to 20 carbon atoms and containing at least one constituent atom selected from the group consisting of hydrogen, oxygen, and nitrogen.)

In a preferred embodiment, the present invention relates to any one of the organic polymers each having a main chain skeleton comprising a saturated hydrocarbon polymer selected from the group consisting of polyisobutylene, hydrogenated polyisoprene, and hydrogenated polybutadiene, and copolymers thereof.

In a preferred embodiment, the present invention relates to any one of the organic polymers each having a main chain skeleton comprising an oxyalkylene polymer or a vinyl polymer.

In a fourth aspect, the present invention relates to any one of the above organic polymers each having epoxy-containing silicon groups at its ends, the organic polymer being produced by addition reaction of an organic polymer having unsaturated groups at its ends with a hydrosilane compound having an epoxy group.

In a fifth aspect, the present invention relates to any one of the above organic polymers each having epoxy-containing silicon groups at its ends, the organic polymer being produced by addition reaction of an organic polymer having unsaturated groups at its ends with a hydrosilane compound having a plurality of hydrosilyl groups, and then addition reaction with an epoxy-containing compound having an unsaturated group at an end.

In a sixth aspect, the present invention relates to a process for producing any one of the above organic polymers each having epoxy-containing silicon groups at its end, the process comprising addition reaction of an organic polymer having unsaturated groups at its ends with a hydrosilane compound having an epoxy group.

In a seventh aspect, the present invention relates to a process for producing any one of the above organic polymers each having epoxy-containing silicon groups at its ends, the process comprising addition reaction of an organic polymer having unsaturated groups at its ends and a hydrosilane compound having a plurality of hydrosilyl groups, and then addition reaction with an epoxy-containing compound having an unsaturated group at an end.

### Best Mode for Carrying Out the Invention

An organic polymer having epoxy-containing silicon groups at its ends according to the present invention exhibits excellent curability when the molecular chain has a plurality of epoxy-containing silicon groups at its ends. Also, the organic polymer exhibits specific characteristics depending on the type of the organic polymer main chain serving as a skeleton. Usable examples of the main chain skeleton of the organic polymer include, without limitation to, generally known organic polymers such as vinyl polymers, polyester polymers, saturated hydrocarbon polymers, and oxyalkylene polymers.

The organic polymer of the present invention has an end structure represented by formula (1) or (2):

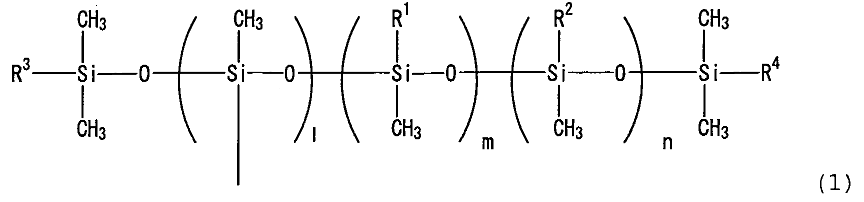

In this formula, R¹ is an epoxy-containing monovalent organic group; R² is a hydrocarbon group having 1 to 20 carbon atoms and may contain at least one phenyl group; R³ and R⁴ are each a methyl group or the same as R¹ or R², or one of R³ and R⁴ is a bond to the organic polymer; 1 is 1 on average and represents a bond to an end of the organic polymer, but l is 0 when one of R³ and R⁴ is a bond to an end of the organic polymer; 1 ≤ m+n ≤ 50, 1 ≤ m, and 0 ≤ n; the position of each unit is not limited; and when a plurality of units is contained, the units may be alternately or randomly arranged.

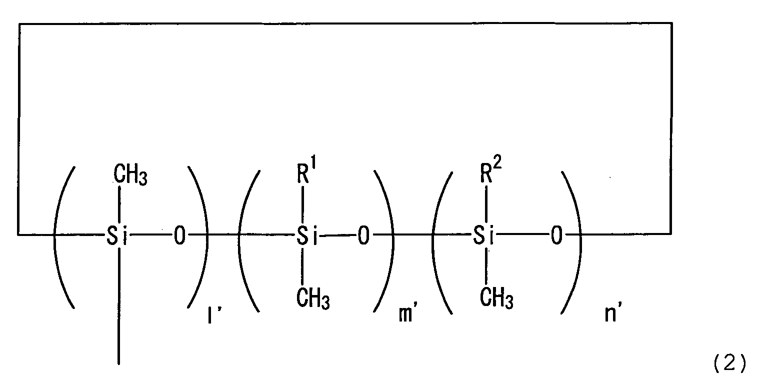

In this formula, R¹ and R² are the same as in formula (1); 1' is 1 on average and represents a bond to an end of the organic polymer; 1 ≤ m'+n' ≤ 20, 1 ≤ m', and 0 ≤ n'; the position of each unit is not limited; and when a plurality of units is contained, the units may be alternately or randomly arranged.

In the end structure of the organic polymer, in view of the reactivity of an epoxy group, R¹ preferably has a structure represented by formula (3), and more preferably a structure represented by formula (4) in view of ease of production and availability of raw materials.

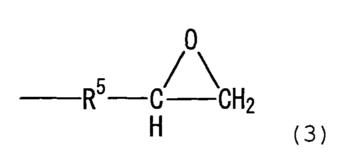

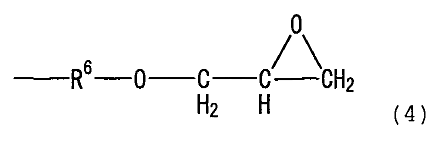

In the present invention, the main chain skeleton of the organic polymer is not limited to the above-described polymers. However, when the main skeleton comprises a saturated hydrocarbon polymer selected from the group consisting of polyisobutylene, hydrogenated polyisoprene, hydrogenated polybutadiene, and copolymers thereof, an oxyalkylene polymer, or a vinyl polymer, the resulting cured product exhibits rubber elasticity.

The saturated hydrocarbon polymer has substantially no carbon-carbon unsaturated bond other than an aromatic ring. Examples of such a saturated hydrocarbon polymer include polyethylene, polypropylene, polyisobutylene, hydrogenated polybutadiene, and hydrogenated polyisoprene.

A polymer used as the saturated hydrocarbon polymer constituting the main chain skeleton in the present invention can be produced by (1) homopolymerization or copolymerization of an olefin compound having 1 to 6 carbon atoms, such as ethylene, propylene, 1-butene, or isobutylene used as a main component, or (2) homopolymerization or copolymerization of a diene compound such as butadiene, isoprene, or the like or copolymerization with the olefin compound and then hydrogenation. In particular, an isobutylene polymer or a hydrogenated polybutadiene polymer is preferred because a functional group can easily be introduced into an end, the molecular weight can easily be controlled, and the number of the functional end groups can easily be increased. Furthermore, the isobutylene polymer is easy to handle because it is liquid or fluid, hydrogenation is not required because its main chain contains no carbon-carbon unsaturated bond other than an aromatic ring, and weather resistance is excellent. Therefore, the isobutylene polymer is most preferred.

The isobutylene polymer may contain an isobutylene unit alone used as a monomer unit, or may contain a monomer unit copolymerizable with isobutylene in an amount of preferably 50% by weight or less, more preferably 30% by weight or less, and most preferably 10% by weight or less.

Examples of such a copolymerizable monomer component include olefins having 4 to 12 carbon atoms, vinyl ethers, aromatic vinyl compounds, vinyl silanes, and allyl silanes. Specific examples of such a copolymerizable component include 1-butene, 2-butene, 2-methyl-1-butene, 3-methyl-1-butene, pentene, 4-methyl-1-pentene, hexene, vinylcyclohexene, methyl vinyl ether, ethyl vinyl ether, isobutyl vinyl ether, styrene, α-methylstyrene, dimethylstyrene, monochlorostyrene, dichlorostyrene, β-pinene, indene, vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, tetravinylsilane, allyltrichlorosilane, allylmethyldichlorosilane, allyldimethylchlorosilane, allyldimethylmethoxysilane, allyltrimethylsilane, diallyldichlorosilane, diallyldimethoxysilane, diallyldimethylsilane, γ-methacryloyloxypropyltrimethoxysilane, and γ-methacryloyloxypropylmethyldimethoxysilane.

Like the isobutylene polymer, a hydrogenated polybutadiene polymer or another saturated hydrocarbon polymer may contain another monomer unit in addition to a monomer unit contained as a main component.

The saturated hydrocarbon polymer, preferably the isobutylene polymer or hydrogenated polybutadiene polymer, preferably has a number-average molecular weight of about 500 to 50,000, and particularly, preferably about 1,000 to 20,000 because it is liquid or fluid and is thus easy to handle.

The main chain structure of the oxyalkylene polymer may comprise a polymer containing an -R⁷-O- structure as a repeating unit in which R⁷ may be a divalent organic group having 1 to 20 carbon atoms. The main chain structure may comprise a homopolymer containing the same repeating unit or a copolymer containing at least two types of repeating units. Alternatively, the main chain may contain a branch structure.

Specific examples of R⁵ include -CH₂CH₂-, -CH(CH₃)CH₂-, -CH(C₂H₅)CH₂-, -C(CH₃)₂CH₂-, and -CH₂CH₂CH₂CH₂-. In particular, R⁵ is preferably -CH(CH₃)CH₂-.

The main chain skeleton comprising the oxyalkylene polymer can be produced by, for example, ring-opening polymerization of monoepoxide in the presence of an initiator and a catalyst.

Specific examples of the initiator include dihydric or polyhydric alcohols such as ethylene glycol, propylene glycol, butanediol, hexamethylene glycol, methallyl alcohol, bisphenol A, hydrogenated bisphenol A, neopentyl glycol, polybutadienediol, diethylene glycol, triethylene glycol, polyethylene glycol, polypropylene glycol, polypropylenetriol, polypropylenetetraol, dipropylene glycol, glycerin, trimethylolmethane, trimethylolpropane, and pentaerythritol; and various oligomers having hydroxyl groups.

Specific examples of monoepoxide include alkylene oxides such as ethylene oxide, propylene oxide, α-butylene oxide, β-butylene oxide, hexene oxide, cyclohexene oxide, styrene oxide, and α-methylstyrene oxide; alkyl glycidyl ethers such as methyl glycidyl ether, ethyl glycidyl ether, isopropyl glycidyl ether, and butyl glycidyl ether; allyl glycidyl ethers; and aryl glycidyl ethers.

Examples of a method for synthesizing the polyoxyalkylene polymer include a polymerization method using KOH as an alkali catalyst, a polymerization method using a transition metal compound-porphyrin complex catalyst, the complex being produced by reaction between an organoaluminium compound and porphyrin as disclosed in Japanese Unexamined Patent Application Publication No. 61-215623, a polymerization method using such a double metal cyanide complex catalyst as disclosed in, for example, Japanese Examined Patent Application Publication Nos. 46-27250 and 59-15336, a polymerization method using a cesium catalyst, and a polymerization method using a phosphazene catalyst. However, the synthetic method is not particularly limited. Among these methods, the polymerization method using a double metal cyanide complex catalyst is preferred from the viewpoint that a high-molecular-weight polymer with less coloring can be easily obtained.

The main chain skeleton comprising the oxyalkylene polymer can also be produced by chain extension of a hydroxyl-terminated oxyalkylene polymer using a difunctional or higher functional alkyl halide such as CH₂Cl₂ or CH₂Br₂ in the presence of a basic compound such as KOH, NaOH, KOCH₃, or NaOCH₃.

The main chain skeleton comprising the oxyalkylene polymer may further contain another component such as a urethane bond component within a range causing little deterioration in the characteristics of the oxyalkylene polymer.

The main chain skeleton comprising the vinyl polymer will be described below.

The vinyl monomer constituting the vinyl polymer main chain of the present invention is not particularly limited, and various types of vinyl monomers can be used. Examples of the vinyl monomer include (meth)acrylic monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adducts of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate; aromatic vinyl monomers such as styrene, vinyltoluene, α-methylstyrene, chlorostyrene, and styrenesulfonic acid and its salts; fluorine-containing vinyl monomers such as perfluoroethylene, perfluoropropylene, and vinylidene fluoride; silicon-containing vinyl monomers such as vinyl trimethoxysilane, and vinyl triethoxysilane; maleic anhydride, maleic acid, and monoalkyl and dialkyl esters of maleic acid; fumaric acid and monoalkyl and dialkyl esters of fumaric acid; maleimide vinyl monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; acrylonitrile monomers such as acrylonitrile and methacrylonitrile; amido-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride; vinylidene chloride; allyl chloride; and allyl alcohols. These compounds may be used alone or a copolymer of at least two of the compounds may be used.

The main chain comprising the vinyl polymer is preferably produced by polymerizing 100 mol% of a monomer selected from the group consisting of (meth)acrylic monomers, acrylonitrile monomers, aromatic vinyl monomers, fluorine-containing vinyl monomers, and silicon-containing vinyl monomers, or polymerizing at least one monomer selected as a main monomer from the group. The main monomer means a monomer at a content of 50 mol% or more, preferably 70 mol% or more, of the monomer units constituting the vinyl polymer. Among these monomers, styrene monomers and (meth)acrylic monomers are preferred from the viewpoint of the physical properties of the product, and acrylic acid ester monomers and methacrylic acid ester monomers are more preferred. Particularly, acrylic acid ester monomers are preferred, and butyl acrylate is most preferred. In the present invention, such a preferred monomer may be copolymerized or block-copolymerized with another monomer. In this case, the content of the preferred monomer is preferably 40% by weight or more. In the above expression, for example, "(meth)acrylic acid" means acrylic acid and/or methacrylic acid.

When rubber elasticity is required, the glass transition temperature of the vinyl polymer is preferably, without limitation to, lower than room temperature or operation temperature.

In the present invention, a known method such as free radical polymerization, controlled radical polymerization, or the like can be preferably used as the method for synthesizing the vinyl polymer. In particular, the controlled radical polymerization is preferably used from the viewpoint that the structure of the present invention can easily be introduced in an end. In the controlled radical polymerization, living radical polymerization is preferred, and atom transfer radical polymerization is more preferred.

In the atom transfer radical polymerization, an organic halide, particularly an organic halide having a carbon-halogen bond with high reactivity (for example, a carbonyl compound having halogen at the α-position or a compound having halogen at the benzyl position), halogenated sulfonyl compound, or the like is used as an initiator.

When the vinyl polymer of the present invention is produced by atom transfer radical polymerization, the molecular weight distribution, i.e., the ratio (Mw/Mn) of the weight-average molecular weight (Mw) to the number-average molecular weight (Mn) measured by gel permeation chromatography, is preferably less than 1.8, more preferably 1.7 or less, still more preferably 1.6 or less, further preferably 1.5 or less, particularly preferably 1.4 or less, and most preferably 1.3 or less. However, the molecular weight distribution is not particularly limited. In the present invention, GPC measurement is usually performed using chloroform as a mobile phase and a polystyrene gel column so that the number-average molecular weight and the like can be determined in terms of polystyrene.

Although the number-average molecular weight of the vinyl polymer of the present invention is not particularly limited, the number-average molecular weigh measured by gel permeation chromatography is preferably in a range of 500 to 1,000,000, more preferably 1,000 to 100,000, and most preferably 5,000 to 50,000.

In the free radical polymerization, any one of the above monomers can be used, and for example, solution polymerization can be performed by radical reaction. The polymerization is performed by reaction of the above-described monomer at 50°C to 150°C in the presence of a radical initiator, a chain transfer agent, and the like.

Examples of the radical initiator include azo-type initiators such as 2,2'-azobisisobutyronitrile, 2,2'-azobis(2-methylbutyronitrile), 4,4'-azobis(4-cyanovaleric) acid, 1,1'-azobis(1-cyclohexanecarbonitrile), azobisisobutyramidine hydrochloride, and 2,2'-azobis(2,4-dimethylvaleronitrile); organic peroxide initiators such as benzoyl peroxide, and di-tert-butyl peroxide. However, azo-type initiator is preferably used from the viewpoint of no influence of the solvent used for polymerization and the low risk of explosion or the like.

Examples of the chain transfer agent include mercaptanes such as n-dodecyl mercaptane, tert-dodecyl mercaptane, lauryl mercaptane, γ-mercaptopropyltrimethoxysilane, γ-mercaptopropylmethyldimethoxysilane, γ-mercaptopropyltriethoxysilane, and γ-mercaptopropylmethyldiethoxysilane; and halogen-containing compounds.

The polymerization may be performed in a solvent. Preferred examples of the solvent include nonreactive solvents such as ethers, hydrocarbons, and esters.

When the polymer is produced by the free radical polymerization, the number-average molecular weight is not particularly limited. However, the number-average molecular weight measured by gel permeation chromatography is preferably 500 to 100,000 in view of ease of handling, and more preferably 5,000 to 30,000 in view of high weather resistance and workability of the cured product.

In the present invention, the method for introducing the epoxy-containing silicon groups having the structure represented by formula (1) or (2) into the ends of the organic polymer is not particularly limited. However, because of no deterioration due to oxidation during the introduction and no need for purification such as deacidification after the introduction, the epoxy-containing silicon groups are preferably introduced by a method comprising addition reaction of an unsaturated group with a hydrosilane compound having an epoxy group or a method comprising addition reaction of an unsaturated group with a hydrosilane compound and then introducing an epoxy group.

The introduction by addition reaction with the hydrosilane compound can be performed by a method (1) in which an organic polymer having unsaturated groups at its ends is synthesized, and then subjected to addition reaction with a hydrosilane compound having one epoxy-containing hydrosilyl group on average, or a method (2) in which an organic polymer is subjected to addition reaction at its ends with a hydrosilane compound having at least two hydrosilyl groups in its molecule, and then subjected to addition reaction of an unreacted hydrosilyl group with an epoxy compound having an unsaturated group such as an allyl group or the like.

In the method (1), the hydrosilane compound has one hydrosilyl group on average, and thus can be easily selectively introduced in an end of the polymer, thereby suppressing an increase in the molecular weight of the polymer. In this case, the charging order of reaction materials is not limited, but the hydrosilane compound having one epoxy-containing hydrosilyl group on average is preferably added dropwise to a mixture of a hydrosilylation catalyst and the organic polymer having unsaturated groups at its ends in view of the heat generated from the reaction system, the viscosity of the organic polymer, and the like.

Although the molar ratio of the hydrosilyl groups to the end unsaturated groups of the organic polymer is not particularly limited, the ratio may be in a range of 0.5 ≤ hydrosilyl group/end unsaturated group of organic polymer ≤ 2.0, preferably in a range of 0.8 ≤ hydrosilyl group/end unsaturated group of organic polymer ≤ 1.5 from the viewpoint of increasing the ratio of introduction of epoxy groups, and more preferably 0.8 ≤ hydrosilyl group/end unsaturated group of organic polymer ≤ 1.2 from the viewpoint of removal of the remaining hydrosilane compound.

In the method (2), the unreacted hydrosilyl groups at the ends of the polymer can be sufficiently reacted with the epoxy-containing compound to permit the introduction of a plurality of epoxy groups in the ends of the polymer. In this case, the charging order of reaction materials is not limited, but preferably, a mixture of the organic polymer and the catalyst is slowly added dropwise to the hydrosilane compound from the viewpoint of suppressing an increase in the molecular weight.

Although the molar ratio of the hydrosilyl groups to the end unsaturated groups of the organic polymer is not particularly limited, the ratio may be in a range of 2.0 ≤ hydrosilyl group/end unsaturated group of organic polymer, preferably in a range of 3.0 ≤ hydrosilyl group/end unsaturated group of organic polymer from the viewpoint of introducing a plurality of epoxy groups in the ends of the organic polymer, and more preferably 3.0 ≤ hydrosilyl group /end unsaturated group of organic polymer ≤ 5.0 from the viewpoint of suppressing an increase in the molecular weight.

In the present invention, the polymer having the specified end structure can be produced using a hydrosilane compound represented by formula (5) or (6). 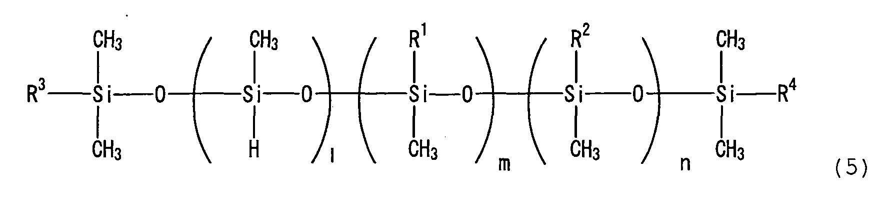 wherein R¹ is a monovalent organic group having an epoxy group; R² is a hydrocarbon group having 1 to 20 carbon atoms and may contain at least one phenyl group; R³ and R⁴ are each hydrogen, a methyl group, or the same as R¹ or R²; l is 1 on average but l is 0 when one of R³ and R⁴ is hydrogen; 1 ≤ m+n ≤ 50, 1 ≤ m, and 0 ≤ n; the position of each unit is not limited; and when a plurality of units is contained, the units may be alternately or randomly arranged. 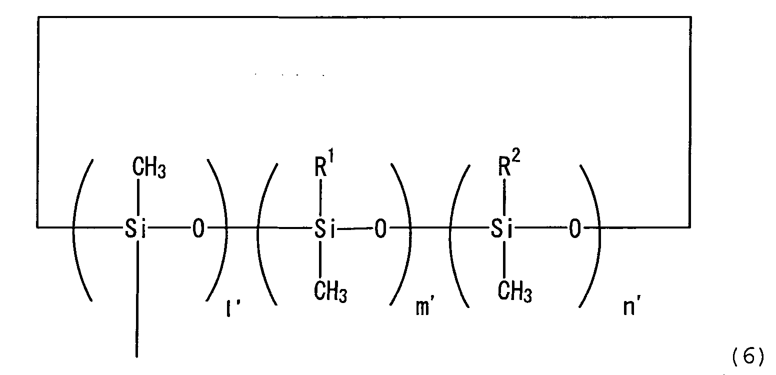 wherein R¹ and R² are the same as in formula (1); l' is 1 on average; 1 ≤ m'+n' ≤ 20, 1 ≤ m', and 0 ≤ n'; the position of each unit is not limited; and when a plurality of units is contained, the units may be alternately or randomly arranged.

In the end structure of the organic polymer, R¹ preferably has a structure represented by formula (3) from the viewpoint of reactivity of an epoxy group, and more preferably has a structure represented by formula (4) from the viewpoint of ease of production and availability of raw materials.

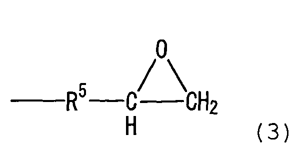

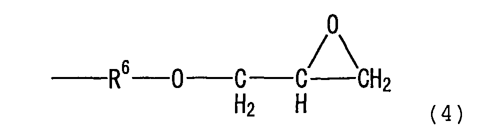

Although R² is a hydrocarbon group having 1 to 20 carbon atoms and may contain at least one phenyl group, R² preferably has 4 or more carbon atoms in order to increase the compatibility with the hydrosilane compound when the organic polymer has a saturated hydrocarbon main chain skeleton.

In formula (5), m+n is 1 to 50, but m+n is preferably 3 to 30, and more preferably 4 to 20 from the viewpoint of an increase in the number of the epoxy groups at an end of the polymer and compatibility between the polymer and the hydrosilane compound.

Although m is 1 or more, m can be controlled according to the properties of the resultant polymer, and m is preferably 2 or more from the viewpoint of reactivity of the resultant epoxy-containing organic polymer.

Although n is 0 or more, n can be controlled for increasing compatibility between the hydrosilane compound and the organic polymer. Particularly, when the main chain skeleton comprises a saturated hydrocarbon organic polymer, n is preferably 1 or more, and more preferably 2 or more when m is 2 or more. When the main chain skeleton has high polarity, for example, when the main chain skeleton comprises an oxyalkylene polymer, n is preferably 1.

Although, in formula (6), m'+n' is 1 to 20, m'+n' is preferably 3 to 20, and more preferably 4 to 20 from the viewpoint of an increase in the number of the epoxy groups at an end of the polymer and compatibility between the polymer and the hydrosilane compound.

Although m' is 1 or more, m' can be controlled according to the properties of the resultant polymer, and m' is preferably 2 or more from the viewpoint of reactivity of the resultant epoxy-containing organic polymer.

Although n' is 0 or more, n' can be controlled for increasing compatibility between the hydrosilane compound and the organic polymer. Particularly, when the main chain skeleton comprises a saturated hydrocarbon organic polymer, n' is preferably 1 or more, and more preferably 2 or more when m' is 2 or more. When the main chain skeleton has high polarity, for example, when the main chain skeleton comprises an oxyalkylene polymer, n' is preferably 1.

The hydrosilane compound can be synthesized by a known synthetic method. For example, the hydrosilane compound can be produced by hydrosilylation reaction of a hydrosilyl group of a polysiloxane compound having a hydrocarbon and a hydrogen atom on each Si atom with a compound having an unsaturated group such as an allyl group or the like at an end.

Namely, an epoxy group can be introduced by hydrosilylation reaction of a compound having an epoxy group and an unsaturated group, for example, allyl glycidyl ether, 1,2-epoxy-9-decene, 1,2-epoxy-5-hexene, 1,2-epoxy-4-vinylcyclohexane, or the like, with a polysiloxane compound having a hydrosilyl group.

Similarly, R² in formula (1) or (2) can be introduced by hydrosilylation reaction of a hydrocarbon having an unsaturated group such as an allyl group or the like at an end, α-methylstyrene, or the like.

As the method for synthesizing the organic polymer having unsaturated groups at its ends, a generally known method can be used without any problem. For example, for the organic polymer having a halogen group at an end and produced by living cationic polymerization or the like, an unsaturated group can be introduced by a method of dehydrohalogenation with a metal alkoxide, or a method of reaction with allyltrimethylsilane or the like in the presence of titanium tetrachloride. Alternatively, an unsaturated group can be introduced by a method of forming an ether bond, an ester bond, a urethane bond, or a carbonate bond by reaction of a hydroxyl end with a compound having an unsaturated bond.

For example, an unsaturated group can be introduced in a hydroxyl group end of the polymer by a method in which the hydroxyl group end is converted to an oxymetal group such as -ONa, -OK, or the like, and then reacted with an unsaturated group-containing compound represented by formula (7) or (8):

CH₂=CH-R⁸-Y (7)

CH₂=C(R⁹)-R⁸-Y (8)

(wherein R⁸ is a divalent organic group having 1 to 20 carbon atoms, and R⁹ is a hydrocarbon group having 10 or less carbon atoms, and Y is a halogen atom).

A method for converting a hydroxyl end group to an oxymetal group comprises reaction with an alkali metal such as Na, K, or the like; a metal hydride such as NaH or the like; a metal alkoxide such as NaOCH₃ or the like; or an alkali hydroxide such as NaOH, KOH, or the like.

Specific examples of the unsaturated group-containing compound represented by formula (7) or (8) include CH₂=CH-CH₂-Cl, CH₂=CH-CH₂-Br, CH₂=CH-C₂H₄-Cl, CH₂=CH-C₂H₄-Br, CH₂=CH-C₃H₆-Cl, CH₂=CH-C₃H₆-Br, CH₂=C(CH₃)-CH₂-Cl, CH₂=C(CH₃)-CH₂-Br, CH₂=C(CH₂CH₃)-CH₂-Cl, CH₂=C(CH₂CH₃)-CH₂-Br, CH₂=C(CH₂CH(CH₃)₂)-CH₂-Cl, and CH₂=C(CH₂CH(CH₃)₂)-CH₂-Br. In particular, CH₂=CH-CH₂-Cl and CH₂=C(CH₃)-CH₂-Cl are preferred in view of reactivity.

In another method for introducing an unsaturated group, an isocyanate compound, a carboxylic acid, an epoxy compound, or the like which has CH₂=CH-CH₂-, CH₂=C(CH₃)-CH₂-, or the like can be used.

The hydrosilylation reaction is preferably performed with the organic polymer having unsaturated groups at its end and the hydrosilane compound in the presence of a group VIII transition metal catalyst.

As the group VIII transition metal catalyst, a metal complex catalyst containing a metal element selected from the VIII group transition metals such as platinum, rhodium, cobalt, palladium, nickel, and the like can be effectively used. Examples of such a complex catalyst include compounds such as H₂PtCl₆·6H₂O, a platinum-vinylsiloxane complex, a platinum-olefin complex, a Pt metal, RhCl(PPh₃)₃, RhCl₃, Rh/Al₂O₃, RuCl₃, IrCl₃, FeCl₃, PdCl₂·2H₂O, and NiCl₂. However, from the viewpoint of hydrosilylation reactivity, the complex catalyst is preferably H₂PtCl₆·6H₂O, a platinum-vinylsiloxane complex, or a platinum-olefin complex. In particular, a platinum-vinylsiloxane complex is preferred because of its short induction period of reaction.

Besides the above complex catalysts, AlCl₃, TiCl₄, or the like, or a radical initiator such as benzoyl peroxide or the like can also be used as the catalyst of the hydrosilylation reaction.

From the viewpoint of the reaction rate and the like, the preferred temperature of the hydrosilylation reaction may be selected from temperatures not causing undesired side reactions such as deterioration of the polymer, and the like. However, the temperature is generally in a range of 10°C to 150°C, preferably 20°C to 120°C, and more preferably 40°C to 100°C. In the reaction, a solvent such as benzene, toluene, xylene, tetrahydrofuran, methylene chloride, pentane, hexane, heptane, or the like can be used for controlling the reaction temperature, the viscosity of the reaction system, or the like according to demand.

The hydrosilylation reaction can be accelerated by a method of reactivating the catalyst with oxygen or adding sulfur, as disclosed in Japanese Unexamined Patent Application Publication No. 8-283339.

In order to inhibit oxidation of the organic polymer, the reaction solvent, the plasticizer or the like contained in the reaction system with oxygen in the hydrosilylation reaction, the hydrosilylation reaction can be performed in the presence of an antioxidant.

There are various conceivable methods for measuring the ratio of introduction of the epoxy-containing silicon groups. At present, the ratio can be precisely determined by an NMR spectral method in which the integrated value of ends having epoxy-containing silicon groups introduced therein is compared with the integrated value of ends not having epoxy-containing silicon groups introduced therein.

Next, the process for producing the saturated hydrocarbon polymer having epoxy-containing silicon groups at its ends according to the present invention will be described in detail below.

The isobutylene polymer having an epoxy group at an end of the present invention can be produced using an isobutylene polymer having a functional group at an end, preferably functional groups at both ends, the isobutylene polymer being produced by a polymerization method referred to as an "inifer method" (cationic polymerization method using a specified compound called an inifer which serves as both an initiator a chain transfer agent). For example, a polyisobutylene having unsaturated groups at its ends is produced by dehydrohalogenation of the polymer or reaction for introducing unsaturated groups into the polymer as disclosed in Japanese Unexamined Patent Application Publication No. 63-105005, and then subjected to hydrosilylation addition reaction with the epoxy-containing hydrosilane compound represented by formula (5) or (6) in the presence of a platinum catalyst to introduce epoxy-containing silicon groups into the polymer.

Similarly, a hydrogenated polybutadiene polymer having unsaturated groups at its end can be produced by, for example, a method in which a hydroxyl end group of a hydroxyl-terminated hydrogenated polybutadiene polymer is converted to an oxymetal group such as -ONa, -OK, or the like, and then the polybutadiene polymer is reacted with an unsaturated group-containing compound represented by formula (7) or (8).

The hydrogenated polybutadiene polymer having unsaturated groups at its end produced by the above-mentioned method has substantially the same molecular weight as that of the hydroxyl-terminated hydrogenated polybutadiene polymer used as a starting material. However, when a polymer having a higher molecular weight is desired, the polybutadiene polymer is reacted with a polyvalent organic halogen compound containing two or more halogen atoms in its molecule, such as methylene chloride, bis(chloromethyl)benzene, bis(chloromethyl) ether, or the like, before being reacted with the organic halogen compound represented by formula (7) or (8) in order to increase the molecular weight. Then, the reaction product may be reacted with the organic halogen compound represented by formula (7) or (8) to produce the hydrogenated polybutadiene polymer having an olefin group at an end and a higher molecular weight.

Epoxy-containing silicon groups can be introduced in the hydrogenated polybutadiene polymer having unsaturated groups at its ends by the same addition reaction with the hydrosilane compound as that for the isobutylene polymer in the presence of the platinum catalyst.

As described above, when the saturated hydrocarbon polymer contains substantially no unsaturated bond other than an aromatic ring in its molecule, a film of the polymer has excellent weather resistance, as compared with a film formed using a conventional rubber polymer such as an organic polymer having an unsaturated bond. Also, the polymer comprises a hydrocarbon and thus has low gas permeability and high water proof, and thus a film having low gas permeability can be formed.

The method for producing the oxyalkylene polymer having epoxy-containing silicon groups at its ends according to the present invention is not particularly limited. For example, the oxyalkylene polymer can be produced by hydrosilylation reaction of the oxyalkylene polymer having unsaturated groups at its ends with an epoxy-containing monohydrosilane compound represented by formula (5) or (6).

The oxyalkylene polymer having unsaturated groups at its ends may be produced by the above-mentioned method. For example, when an unsaturated group is introduced by an ether bond, the hydroxyl end of the oxyalkylene polymer is converted to an oxymetal group such as -OM (M is Na, K, or the like), and then the oxyalkylene polymer is reacted with the unsaturated group-containing compound represented by formula (7) or (8).

The method for producing the vinyl polymer having epoxy-containing silicon groups at its ends of the present invention is not particularly limited. For example, the vinyl polymer can be produced by hydrosilylation reaction of the vinyl polymer having unsaturated groups at its ends with an epoxy-containing monohydrosilane compound represented by formula (5) or (6).

The organic polymer having epoxy-containing silicon groups at its ends of the present invention is a novel polymer in which epoxy-containing silicon groups are selectively introduced in the ends, and the organic polymer can be synthesized with avoiding deterioration of the polymer main chain, and the like during the production. The resultant polymer can be singly cured by known reaction of an epoxy group, and it is expected that the characteristics derived from the polymer main chain are expressed by using as a modifier generally used for epoxy-type cured products.

The method for curing the organic polymer having epoxy-containing silicon groups at its end of the present invention comprises curing reaction of the epoxy group with a general curing agent for epoxy-containing compounds. Examples of the curing agent include an amine curing agent, an acid curing agent, a boron trifluoride amine complex curing agent, and a photo-cation curing agent. Such a curing agent can be used by a general method.

### EXAMPLES

The present invention will be described in further detail below with reference to examples, but the present invention is not limited to these examples.

### (SYNTHETIC EXAMPLE 1)

### (Synthesis of epoxy-containing hydrosilane)

In a 200 ml three-necked flask, 23.3 g of methyl hydrogen polysiloxane having five repeating units of siloxane bonds on average, and 20 g of toluene were charged, and heated to 90°C in the flask provided with a condenser and a dropping tube. Then, a mixture containing 7.7 g of α-methylstyrene, 7.44 g of allyl glycidyl ether, 15 g of toluene, and 6 µl of a platinum-1,1,3,3-tetramethyl-1,3-divinyldisiloxane complex (a toluene solution containing 0.3% by weight of the complex in terms of platinum) was slowly added dropwise to the flask, followed by stirring for 2 hours. The number of moles of hydrosilane molecules was calculated from the amount of the hydrogen generated by adding dropwise an aqueous alkali solution to a solution of methyl hydrogen polysiloxane in an alcohol. The progress of reaction was confirmed by tracing decreases in peaks (about 5.0 ppm and 5.3 ppm) of the unsaturated group of α-methylstyrene, peaks (about 5.3 ppm and 5.9 ppm) of the unsaturated group of allyl glycidyl ether, and a peak (about 4.4 ppm) of hydrosilane in ¹H-NMR. After the completion of reaction, ¹H-NMR confirmation showed the production of hydrosilane (SH-1) having two α-methylstyrene groups on average, two epoxy groups on average, and one residual hydrosilyl group on average as shown by formula (9).

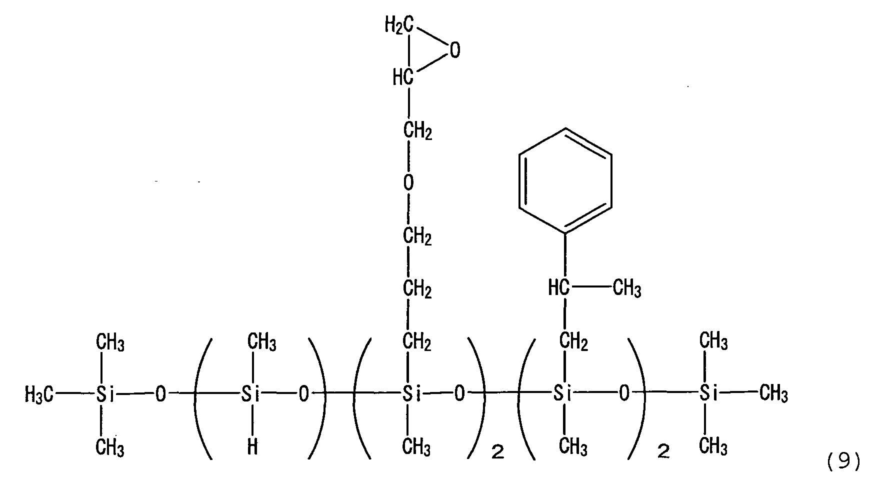

### (SYNTHETIC EXAMPLE 2)

### (Synthesis of epoxy-containing cyclic hydrosilane)

In a 300 ml three-necked flask, 100 g of 1,3,5,7-tetramethylcyclotetrasiloxane was charged and heated to 90°C. Then, a mixture containing allyl glycidyl ether in an amount of 35.6 g which was 3/4 equivalent to the hydrosilane, and 10 µl of a platinum-1,1,3,3-tetramethyl-1,3-divinyldisiloxane complex (a toluene solution containing 0.3% by weight of the complex in terms of platinum) was dissolved in 35 g of toluene, and the resultant solution was slowly added dropwise to the flask. After reaction for 1 hour, the peaks (about 5.3 ppm and 5.9 ppm) of the allyl group in ¹H-NMR were measured. As a result, it was confirmed that the ally group disappeared in the product, and thus a compound (SH-2) having one hydrosilyl group on average and represented by formula (10) was produced.

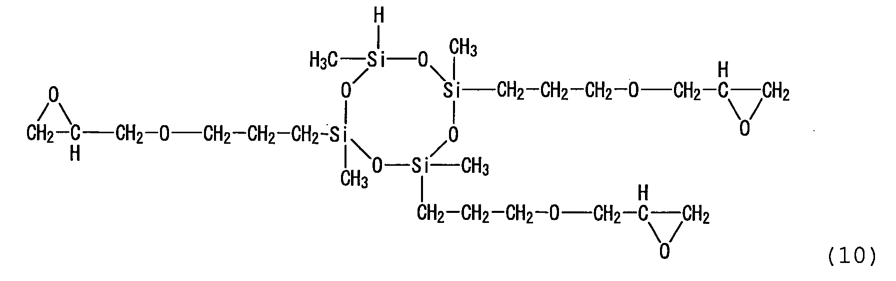

### (SYNTHETIC EXAMPLE 3)

### (Synthesis of allyl-terminated isobutylene polymer)

A three-way stopcock was attached to a 2 L pressure-tight glass vessel, and the air in the vessel was replaced by nitrogen. Then, 138 ml of ethylcyclohexane (dried by being allowed to stand in one night or more together with molecular sieves 3A), 1,012 ml of toluene (dried by being allowed to stand in one night or more together with molecular sieves 3A), and 8.14 g (35.2 mmol) of 1,4-bis(α-chloroisopropyl)benzene were added to the vessel using an injection.

Then, a pressure-tight glass liquefaction sampling tube with a needle valve, the tube containing 254 ml (2.99 mol) of isobutylene monomer, was connected to the three-way stopcock, and the polymerization vessel was cooled in a dry ice/ethanol bath at -70°C. Then, the vessel was evacuated with a vacuum pump, and the needle value was opened to introduce the isobutylene monomer into the polymerization vessel from the liquefaction sampling tube. Then, nitrogen was introduced through one of the ways of the three-way stopcock to return the inside of vessel to atmospheric pressure, and 0.387 g (4.15 mmol) of 2-methylpyridine was added. Then, 4.90 ml (44.7 mmol) of titanium tetrachloride was added to initiate polymerization. After reaction for 70 minutes, 9.65 g (13.4 mmol) of allyl trimethylsilane was added to perform reaction for introducing allyl groups in the polymer ends. After reaction for 120 minutes, the reaction solution was washed with 200 ml of water four times, and the solvent was distilled off to produce an allyl-terminated isobutylene polymer (P-1).

The yield was calculated from the amount of the resultant polymer, and Mn and Mw/Mn were determined by GPC. Also, the end structure was determined by 300 MHz ¹H-NMR analysis in which the intensities of resonance signals of protons (proton derived from the initiator: 6.5 to 7.5 ppm, and peaks of the ally group derived from the polymer end (4.97 ppm: =CH₂, and 5.79 ppm: -CH=C)) due to the respective structures were measured and compared. The ¹H-NMR was measured by Varian Gemini 300 (300 MHz for ¹H) in carbon tetrachloride/deuteroacetone.

The GPC was performed using Waters LC Module 1 as a feeding system and a Shodex K-804 column. The molecular weight was determined relative to a polystyrene standard. The analytical values of the polymer included Mn = 5800, Mw/Mn = 1.39, and Fn(v) = 1.88 (the number of the ally groups per molecule of an aromatic ring serving as an initiator residue in NMR analysis).

### (SYNTHETIC EXAMPLE 4)

### (Synthesis of oxypropylene polymer having ally groups at the ends)

Propylene oxide was polymerized using polypropylene glycol having a number-average molecular weight of 2,000 as an initiator in the presence of a zinc hexacyanocobaltate glyme complex catalyst to produce polypropylene glycol having a number-average molecular weight of 10,000. Then, 1.2 times equivalents of CH₃ONa (methanol solution) based on the end hydroxyl groups of the polypropylene glycol were added, and the ends were converted to oxymetal groups under removal of methanol at reduced pressure. Then, 1.3 times equivalents of 3-chloropropene were added and subjected to reaction. Thereafter, a by-product salt was removed by desalting purification to obtain an oxypropylene polymer (P-2) having allyl groups at its ends.

As a result of measurement of the content of the end ally groups of the resultant polymer, the content was 0.223 mmol/g.

### (SYNTHETIC EXAMPLE 5)

### (Introduction-1 of epoxy-containing silicon groups in the ends of a polymer)

In a 500 ml three-necked flask, 100 g of the polyisobutylene polymer (P-1) containing allyl groups at its ends and produced by SYNTHETIC EXAMPLE 3, 0.05 g of 1,4-tert-butyl-4-hydroxytoluene, and 100 g of toluene were charged, and a stirrer with a vacuum seal, a condenser, and a ball cock were attached to the flask.

Then, the resultant mixture was heated to 100°C, and 11.1 µl of a 1% toluene solution of sulfur was added dropwise to the mixture in a 6% oxygen-containing air atmosphere, followed by stirring. Then, 21.6 µl of a toluene solution of a platinum-1,1,3,3-tetramethyl-1,3-divinyldisiloxane complex (toluene solution containing 3% by weight of the complex in terms of platinum) was added dropwise to the mixture, followed by stirring. Then, 26.0 g of the hydrosilane compound (SH-1) synthesized in SYNTHETIC EXAMPLE 1 was slowly added dropwise and subjected to reaction for 6 hours.

The progress of reaction was confirmed by measuring decreases and disappearance of peaks (5.1 ppm: =CH₂, and 5.9 ppm: -CH=C) of the end allyl groups, and decreases of a peak (4.8 ppm) of the hydrosilyl group (Si-H) of the added epoxy-containing hydrosilane in ¹H-NMR.

As a result of ¹H-NMR measurement of the product, it was found that the peak due to the hydrosilane and the peaks due to the ally groups of the initial polymer containing ally groups at its ends completely disappeared. Consequently, the target isobutylene polymer having epoxy-containing silicon groups having the structure represented by formula (11) at its ends was obtained.

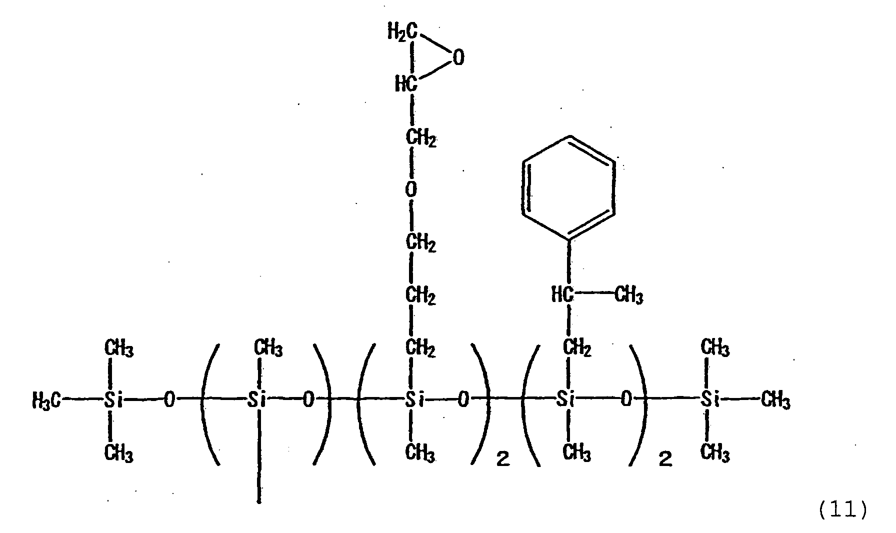

### (SYNTHETIC EXAMPLE 6)

### (Introduction-2 of epoxy-containing silicon groups in the ends of a polymer)

In a 300 ml three-necked flask, 100 g of the oxypropylene polymer containing ally groups at its ends and produced by SYNTHETIC EXAMPLE 4 and 2 g of hexane were charged, and a stirrer with a vacuum seal, a three-way stopcock, and a ball cock were attached to the flask. Then, the resultant mixture was heated to 90°C, stirred, and subjected to azeotropic dehydration with a vacuum pump for 2 hours.

Then, 4.10 µl of a toluene solution of a platinum-1,1,3,3-tetramethyl-1,3-divinyldisiloxane complex (toluene solution containing 3% by weight of the complex in terms of platinum) was added dropwise to the mixture, followed by sufficient stirring. Then, 13.0 g of the epoxy-containing hydrosilane compound (SH-2) synthesized in SYNTHETIC EXAMPLE 2 was slowly added dropwise in a nitrogen atmosphere, followed by stirring for 2 hours.

The progress of reaction was confirmed by measuring decreases and disappearance of peaks (4.97 ppm: =CH₂, and 5.79 ppm: -CH=C) of the end allyl groups, and decreases of a peak (4.6 ppm) of the hydrosilyl group (Si-H) of the added epoxy-containing monohydrosilane in ¹H-NMR.

As a result of ¹H-NMR measurement of the product, it was found that the peak due to the hydrosilane and the peaks due to the ally groups of the initial polymer containing ally groups at its ends completely disappeared. Consequently, an oxyalkylene polymer having epoxy-containing silicon groups having the structure represented by formula (12) at its ends was obtained.

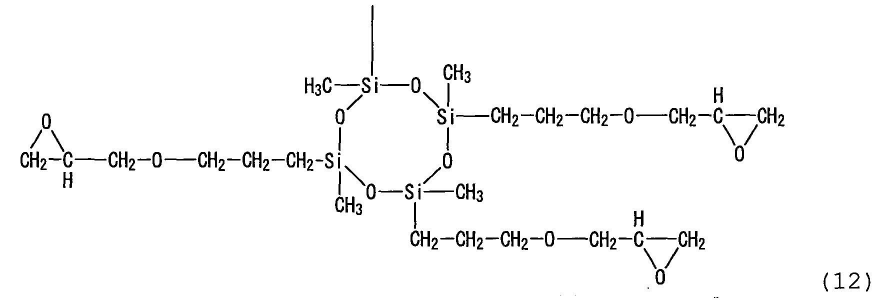

### (SYNTHETIC EXAMPLE 7)

### (Introduction-3 of epoxy-containing silicon groups in the ends of a polymer)

In a 500 ml three-necked flask, 7.8 g of 1,3,5,7-tetramethylcyclotetrasiloxane was charged and heated to 100°C. Then, a mixture containing a solution of 100 g of the polyisobutylene polymer (P-1) containing an ally group at an end and produced by SYNTHETIC EXAMPLE 3 in 100 g of toluene, 11.1 µl of a 1% toluene solution of sulfur, and 25 µl of a platinum-1,1,3,3-tetramethyl-1,3-divinyldisiloxane complex (toluene solution containing 3% by weight of the complex in terms of platinum) was slowly added dropwise in a 6% oxygen-containing air atmosphere, followed by stirring for 4 hours. It was confirmed that the peaks of the end ally groups of the polyisobutylene polymer (P-1) in ¹H-NMR disappeared.

Then, the air in the system was replaced by a nitrogen atmosphere. A mixture containing 16.64 g of allyl glycidyl ether and 3.6 µl of a platinum-1,1,3,3-tetramethyl-1,3-divinyldisiloxane complex (toluene solution containing 3% by weight of the complex in terms of platinum) was dissolved in 15 g of toluene, and the resultant solution was slowly added dropwise to the reaction solution. After reaction for 1 hour, peaks (about 5.3 ppm and 5.9 ppm) of the allyl groups in ¹H-NMR were measured. As a result, it was confirmed that the peaks of the allyl groups of the product disappeared. Consequently, an isobutylene polymer containing epoxy-containing silicon groups having the structure represented by formula (12) at its ends was obtained.

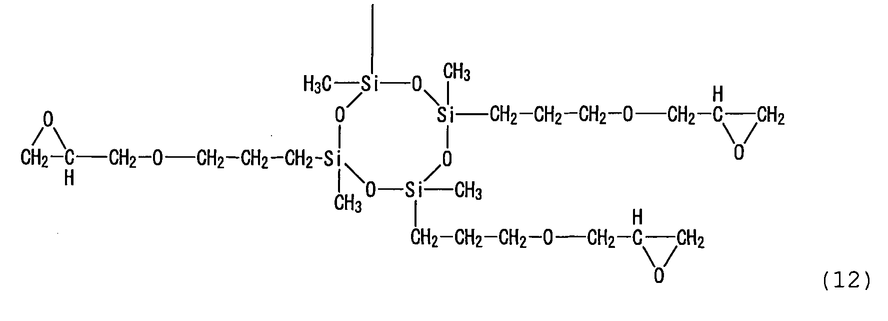

### (SYNTHETIC EXAMPLE 8)

### (Synthesis of an acrylate polymer containing alkenyl groups at its ends)

In a reactor with a stirrer, CuBr (4.6 parts) and acetonitrile (41.6 parts) were added, and the resultant mixture was stirred at 65°C for 15 minutes in a nitrogen atmosphere. Then, acrylic acid esters (100 parts) (including n-butyl acrylate (27.6 parts), ethyl acrylate (39.8 parts), and 2-methoxyethyl acrylate (32.6 parts)), and diethyl 2,5-dibromoadipate (13.0 parts) were added to the mixture, followed by sufficient stirring. Then, pentamethyldiethylenetriamine (referred to as "triamine" hereinafter) (0.09 part) was added to initiate polymerization. Then, acrylic acid esters (400 parts) (including n-butyl acrylate (111 parts), ethyl acrylate (159 parts), and 2-methoxyethyl acrylate (130 parts)) were continuously added dropwise under heating at 70°C. During the addition of the acrylic acid esters, triamine (0.84 part) was added in parts.

When the ratio of monomer reaction reached 96%, the remaining monomers and acetonitrile were devolatilized at 80°C, and 1,7-octadiene (119 parts), acetonitrile (125 parts), and triamine (1.87 parts) were then added to the reaction mixture. The resultant mixture was stirred under heating at 70°C to produce a mixture containing an alkenyl-containing polymer.

The acetonitrile and unreacted 1,7-octadiene remaining in the mixture were devolatilized by heating, and the residue was diluted with methylcyclohexane. The insoluble polymerization catalyst was removed by settling with a centrifugal separator. Then, 4 parts of an adsorbent (2 parts of Kyowaad 500SH and 2 parts of Kyowaad 700SL: both produced by Kyowa Chemical Industry Co., Ltd.) relative to 100 parts of the polymer was added to the methylcyclohexane solution of the polymer, and the resultant mixture was stirred under heating in an atmosphere of a gas mixture containing oxygen and nitrogen. After the insoluble contents were removed, devolatilization (degree of evacuation; 1333 Pa or less) was performed by heating at 180°C under stirring for 12 hours to produce a polymer. Then, 100 parts of the resultant polymer was diluted with 400 parts of toluene, and 6 parts of an adsorbent (3 parts of Kyowaad 500SH and 3 parts of Kyowaad 700SL: both produced by Kyowa Chemical Industry Co., Ltd.) relative to 100 parts of the polymer was added to the toluene solution of the polymer, followed by stirring under heating in an atmosphere of an oxygen-nitrogen gas mixture. After the solid contents were removed, the solution was concentrated to obtain an acrylate polymer (P-3) containing alkenyl groups at its ends. The polymer had a number-average molecular weight of 16,900 and a molecular weight distribution of 1.13. The number of the alkenyl groups per molecule of the polymer was 2.0.

### (SYNTHETIC EXAMPLE 9)

### (Introduction-4 of epoxy-containing silicon groups in the ends of a polymer)

In a 300 ml three-necked flask, 100 g of the acrylate polymer (P-3) containing alkenyl groups at its ends produced in SYNTHETIC EXAMPLE 8 and 2 g of hexane were charged, and a stirrer with a vacuum seal, a three-way stopcock, and a ball cock were attached to the flask. Then, the resultant mixture was heated to 100°C, stirred, and subjected to azeotropic dehydration with a vacuum pump for 2 hours.

Then, 42.0 µl of a platinum-1,1,3,3-tetramethyl-1,3-divinyldisiloxane complex (toluene solution containing 3% by weight of the complex in terms of platinum) was added dropwise to the mixture, followed by sufficient stirring. Then, 6.9 g of the epoxy-containing hydrosilane (SH-2) synthesized in SYNTHETIC EXAMPLE 2 was slowly added dropwise in a nitrogen atmosphere, followed by stirring for 2 hours.

The progress of reaction was confirmed by measuring decreases and disappearance of peaks (5.0 ppm: =CH₂, and 5.8 ppm: -CH=C) of the end alkenyl groups, and decreases of a peak (4.6 ppm) of the hydrosilyl group (Si-H) of the added epoxy-containing monohydrosilane in ¹H-NMR.

As a result of ¹H-NMR measurement of the reaction product, it was found that the peak due to the hydrosilane and the peaks due to the alkenyl group of the initial polymer containing alkenyl groups at its ends completely disappeared. Consequently, a vinyl polymer having epoxy-containing silicon groups having the structure represented by formula (12) at its ends was obtained.

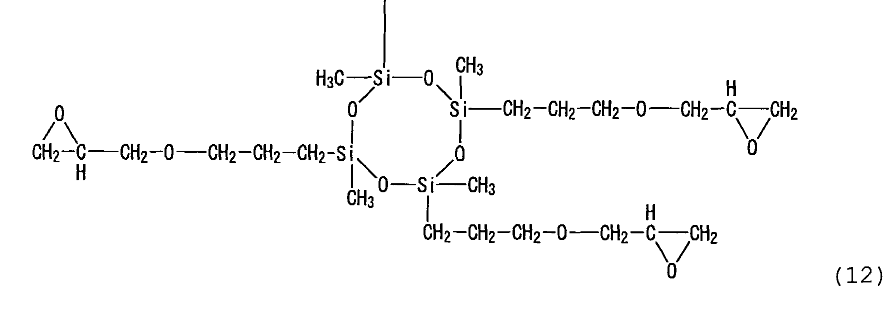

### Industrial Applicability

The present invention provides a polymer produced by introducing selectively and quantitatively introducing a plurality of epoxy-containing silicon groups in the ends of any one of various organic polymers. The present invention also provides a process for easily producing the polymer, in which deterioration of polymers by oxidation or the like during the introduction of epoxy groups does not occur, or no labor for purification or the like due to the generation of by-products is required.

The organic polymer having epoxy-containing silicon groups at its ends produced in the present invention has excellent reactivity and can thus be singly used as a cured product or a modifier for a cured product for imparting the characteristics of the main chain skeleton of the polymer. Therefore, the organic polymer is very useful in various industrial applications.

The organic polymer having epoxy-containing silicon groups at its ends of the present invention is useful as an adhesive, a coating material, a sealant composition, a waterproofing agent, a spray, a molding material, an injection-type rubber material, or the like when being mixed with another polymer, a filler, a reinforcing agent, additives, a catalyst, or the like according to demand.

In particular, a saturated hydrocarbon polymer having epoxy-containing silicon groups at its ends of the present invention exhibits excellent photo-curability when a photo-cation initiator is used. Such a curable composition is suitable for an adhesive or a sealant used in electronic materials. The saturated hydrocarbon polymer is particularly suitable for an adhesive or a sealant for parts weak against heat and moisture, for example, organic EL and the like, because of the properties of the main chain of the polymer such as heat resistance, low moisture permeability, low moisture absorption, low gas permeability, etc.

In particular, when the polymer of the present invention has a main chain skeleton comprising a saturated hydrocarbon polymer, excellent heat resistance, low moisture permeability, low moisture absorption, low gas permeability, etc. can be imparted to a cured product containing the polymer. The cured product is suitable for an adhesive or a sealant used in electronic materials, and particularly suitable for an adhesive or a sealant used for parts weak against heat and moisture, for example, organic EL and the like.

Also, when the polymer of the present invention has a main chain skeleton comprising an oxyalkylene polymer, excellent low-temperature characteristics, flexibility, compatibility with other components, and the like can be imparted to a cured product containing the polymer.

Furthermore, when the polymer of the present invention has a main chain skeleton comprising a vinyl polymer, excellent weather resistance, flexibility, compatibility with other components, and the like can be imparted to a cured product containing the polymer according to the types of monomers.

## Claims

1. An organic polymer having an end structure represented by formula (1) or (2): 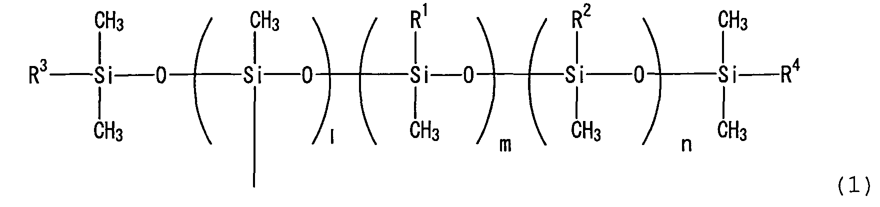 (wherein R¹ is an epoxy-containing monovalent organic group; R² is a hydrocarbon group having 1 to 20 carbon atoms and may contain at least one phenyl group; R³ and R⁴ are each a methyl group or the same as R¹ or R², or one of R³ and R⁴ is a bond to the organic polymer; 1 is 1 on average and represents a bond to an end of the organic polymer but l is 0 when one of R³ and R⁴ is a bond to an end of the organic polymer; 1 ≤ m+n ≤ 50, 1 ≤ m, and 0 ≤ n; the position of each unit is not limited; and when a plurality of units is contained, the units may be alternately or randomly arranged.) 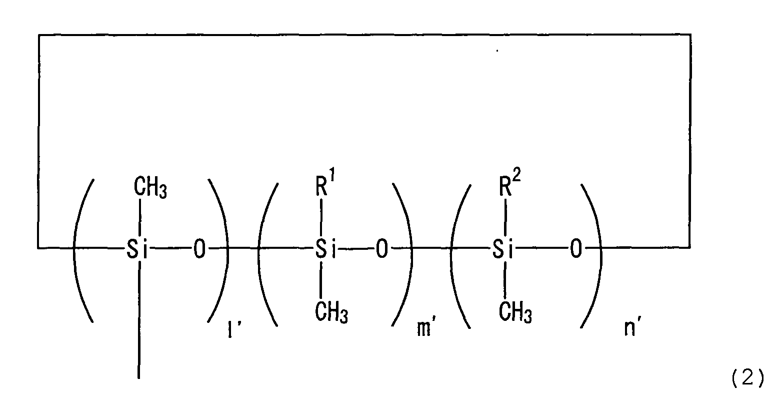 (wherein R¹ and R² are the same as in formula (1); l' is 1 on average and represents a bond to an end of the organic polymer; 1 ≤ m'+n' ≤ 20, 1 ≤ m', and 0 ≤ n'; the position of each unit is not limited; and when a plurality of units is contained, the units may be alternately or randomly arranged.)

2. The organic polymer according to claim 1, wherein the R¹ has a structure represented by formula (3): 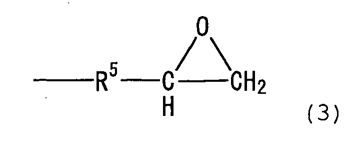 (wherein R⁵ represents a divalent organic group having 1 to 20 carbon atoms and containing at least one constituent atom selected from the group consisting of hydrogen, oxygen, and nitrogen.)

3. The organic polymer according to claim 1, wherein the R¹ has a structure represented by formula (4): 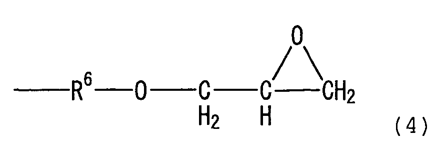 (wherein R⁶ represents a divalent organic group having 1 to 20 carbon atoms and containing at least one constituent atom selected from the group consisting of hydrogen, oxygen, and nitrogen.)

4. The organic polymer according to any one of claims 1 to 3, wherein the main skeleton of the polymer comprises a saturated hydrocarbon polymer selected from the group consisting of polyisobutylene, hydrogenated polyisoprene, hydrogenated polybutadiene, and copolymers thereof.

5. The organic polymer according to any one of claims 1 to 3, wherein the main skeleton of the polymer comprises an oxyalkylene polymer or a vinyl polymer.

6. The organic polymer according to any one of claims 1 to 5, wherein the organic polymer is produced by addition reaction between an organic polymer having unsaturated groups at its ends and a hydrosilane compound having an epoxy group.

7. The organic polymers according to any one of claims 1 to 5, wherein the organic polymer is produced by addition reaction between an organic polymer having unsaturated groups at its ends and a hydrosilane compound having a plurality of hydrosilyl groups, and then addition reaction with an epoxy-containing compound having an unsaturated group at an end.

8. A process for producing the organic polymer according to any one of claims 1 to 5, the process comprising addition reaction between an organic polymer having unsaturated groups at its ends and a hydrosilane compound having an epoxy group.

9. A process for producing the organic polymer according to any one of claims 1 to 5, the process comprising addition reaction between an organic polymer having unsaturated groups at its ends and a hydrosilane compound having a plurality of hydrosilyl groups, and then addition reaction with an epoxy-containing compound having an unsaturated group at an end.
